Europäisches Patentamt

(19) European Patent Office

Office européen des brevets

(11) Publication number: **0 264 267**
**A2**

## (12) EUROPEAN PATENT APPLICATION

(21) Application number: 87309065.8

(22) Date of filing: 14.10.87

(51) Int. Cl.⁴: **G 06 F 3/12**

(30) Priority: 14.10.86 US 918406

(43) Date of publication of application:
20.04.88 Bulletin 88/16

(84) Designated Contracting States: **DE FR GB IT**

(71) Applicant: International Business Machines Corporation
Old Orchard Road
Armonk, N.Y. 10504 (US)

(72) Inventor: Malcolm, Jerry Walter
12040 Lincolnshire
Austin Texas 78758 (US)

(74) Representative: Atchley, Martin John Waldegrave
IBM United Kingdom Limited Intellectual Property
Department Hursley Park
Winchester Hampshire SO21 2JN (GB)

(54) Printer control system for determining the total width of the space to be occupied by a printed character.

(57) The present invention relates to a printer control system of the type comprising means for receiving data representing characters to be printed including, for each character, data representing the width of the space leading the character during printing, and character space determining means for determining the total width of the space to be occupied by each printed character.

According to the invention the printer control system is characterised in that the character space determining means determines the total width of the space to be occupied by the character as the sum of the width of the leading space in front of the character, the width of the character itself, and the width of a trailing space behind the character of size equal to the width of the leading space.

EP 0 264 267 A2

**Description**

## PRINTER CONTROL SYSTEM FOR DETERMINING THE TOTAL WIDTH OF THE SPACE TO BE OCCUPIED BY A PRINTED CHARACTER

This invention relates generally to printer control systems for defining the width of the space to be occupied by a printed character and has a particular application in proportional spacing printing in which the width of the space to be occupied by each character depends on the type of character.

Two types of tables are commonly used in the prior art printer control systems for defining the width of spaces to be occupied by characters in proportional spacing printing. One such table has stored therein character dot patterns used for controlling the positioning of dots on a sheet of paper being printed. Another such table stores information defining the escapement, or character width, of each character to be printed in a proportional spacing format. To print characters in a proportional spacing format generally requires at least one table of each type. These tables are also generally stored in the working memory of a control system for controlling the dot positioning on the paper being printed. The control system could be incorporated in a printer or could be incorporated in a keyboard/display standalone, or host connected, computer workstation or system which controls a printer.

The object of the present invention is to provide an improved printer control system which determines the total width of the space to occupied by each character to be printed.

The present invention relates to a printer control system of the type comprising means for receiving data representing characters to be printed including, for each character, data representing the width of the space leading the character during printing, and character space determining means for determining the total width of the space to be occupied by each printed character.

According to the invention the printer control system is characterised in that the character space determining means determines the total width of the space to be occupied by the character as the sum of the width of the leading space in front of the character, the width of the character itself, and the width of a trailing space behind the character of size equal to the width of the leading space.

A printer control system according to the invention eliminates the need of a table defining escapement or total character space width. This table takes up space in working memory that 1) could be used for other purposes, and 2) can impact performance. The table can be eliminated if the character's defined dot pattern in a dot pattern table is analysed to determine escapement. The advantages of such a printer control system are the making available of additional memory for other jobs, tasks, etc., and the elimination of the task of building new tables for new fonts.

In order that the invention may be more readily understood an embodiment will now be described with reference to the accompanying drawings, in which:

Fig. 1 is a block diagram illustration of a prior art printer control system including a program stored in working memory for effecting proportional spacing printing,

Fig. 2 illustrates a dot pattern for a character stored in a dot pattern table, and

Fig. 3 is a flow chart illustrating operations performed in a printer control system according to the invention which determines proportional width escapement from a character dot pattern table.

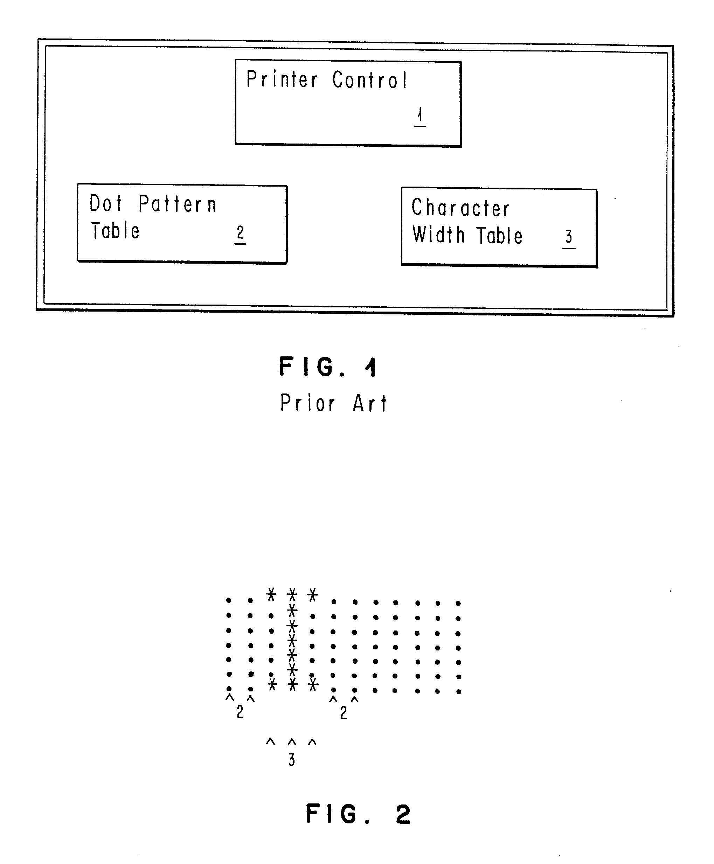

Refer first to Fig. 1. In Fig. 1 is illustrated a prior art control system to control a dot matrix printer which prints individual dots on a page being printed in such a way as to represent the likeness of characters. This printer control system may reside in the printer itself, or it may be resident in a program that resides in, or is loadable into, a computer system. Again, this printer control system controls the printed output in terms of positioning each individual dot on the page. Included in this control system is a program hereinafter referred to as printer control 1.

Associated with printer control 1 is a dot pattern table 2 which defines, or has stored therein, the arrangement of dots for each character. When printer control 1 is instructed by an application program to print a character, printer control 1 locates the arrangement of dots in the dot pattern table 2 for the character. Printer control 1 then causes printing of the arrangement of dots on the page. In a standard spacing environment, there is a set number of columns of dots for each character. In a proportional spacing environment, the numbers of columns of dots for all the characters are not the same and printer control 1 must obtain a number for each character from the character's entry in the character width table 3. This number will represent the number of columns to be printed. Included in the number will be the blank columns leading and following the columns in which the actual character is printed. For example, the actual width of an upper case character "A" may be five columns, and the actual width of an upper case "I" may be 3 columns. The total width of the space occupied by a character will include the actual character width plus blank spaces on either side of the character.

By using a control system according to this invention, the character width table 3 can be eliminated, and future chores of building new character width tables for new fonts are eliminated. The control system causes each character in the dot pattern table 2 to be analysed in order to determine the number of columns of the character's dot pattern that will be printed based on the actual width of the character, and the number of leading blank columns. For actual printing, the overall width will include an amount equal to twice the leading blank space in the dot pattern's allocated space plus the actual width of the character's dot pattern.

Refer next to Fig. 2. which is an illustration of a representative arrangement of dots in dot pattern table 2 for an upper case "I". Note that the allocated space in the table for this character is twelve vertical columns wide. Note also that there are two leading vertical columns that contain no dots. Note further that the width of the actual dot pattern for the character is 3 vertical columns. The control system according to the invention provides a routine or algorithm which in effect balances or centres the character by discarding or disregarding trailing blank columns in excess of leading blank columns. Therefore, the escapement or spaced used to print this character is seven vertical columns.

Set out below is an illustration of a routine that may be used by, or incorporated into printer control 1 to provide a control system according to the invention. This routine is in programming design language from which both source code and machine code are derivable.

```
GET PATTERN FOR CHARACTER TO BE PRINTED
DETERMINE THE NUMBER OF LEADING BLANK
COLUMNS IN CHARACTER PATTERN
DETERMINE THE NUMBER OF COLUMNS IN THE
ACTUAL PATTERN ESCAPEMENT = # LEADING
BLANK COLUMNS + # OF COLUMNS FOR THE
PATTERN + # LEADING BLANK COLUMNS
IF ESCAPEMENT < 2 THEN ESCAPEMENT = 2
ENDIF
IF ESCAPEMENT > 12 THEN ESCAPEMENT = 12
ENDIF
PRINT THE LEFT-MOST NUMBER OF COLUMNS
OF THE CHARACTER PATTERN SPECIFIED BY
ESCAPEMENT
```

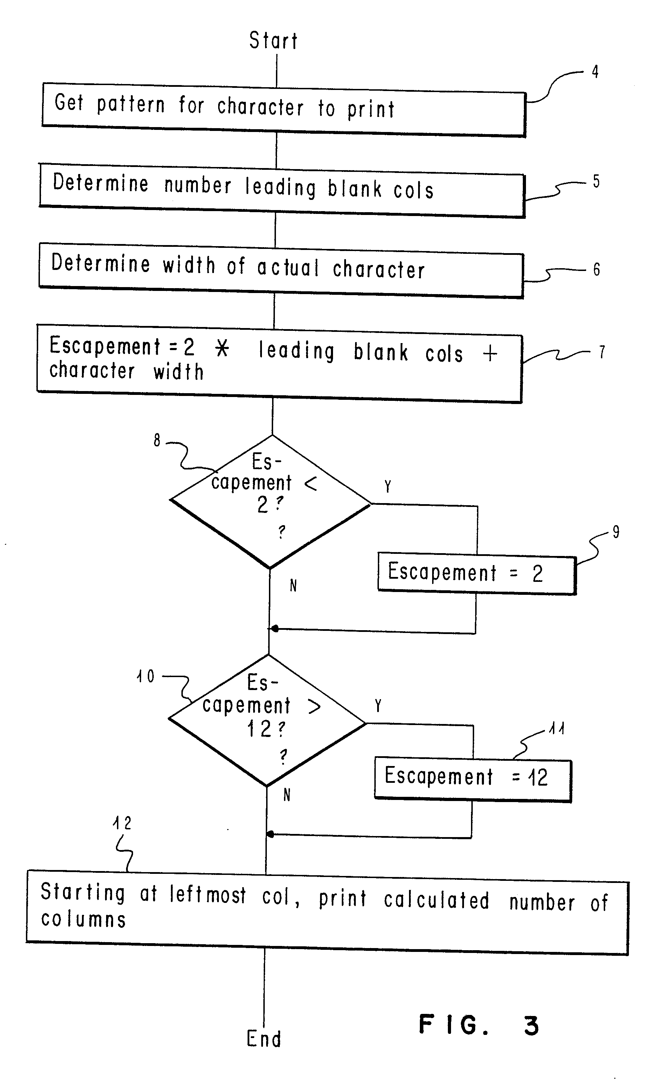

Refer next to the flow chart of Fig. 3 in conjunction with the above routine. Defined are the operations performed to determine a width for a character to be printed.

First, the pattern for a selected character to be printed is located as indicated by block 4. In block 5, a determination is made as to the number of leading blank columns in the character's dot pattern. Next, as indicated by block 6, a determination is made as to the number of columns that contain dots for the actual character in the pattern.

With the above information in hand, a total escapement or space width calculation is made by adding the number of leading blank columns to the number of columns containing dots, and then again adding the number of leading blank columns to balance the character. This is indicated by block 7. As such, a character is in effect built for proportional spacing printing

Next, in order to ensure aesthetically pleasing print, a calculation is made to determine if the escapement or space width for the character is within established range boundaries. If the calculated escapement is less than 2, as indicated by block 8, then escapement is forced to a minimum value of 2 as indicated by block 9. If the calculated escapement is greater than 12 as indicated by block 10, then escapement is forced to 12.

Finally, the calculated escapement or space width is used to print the dot pattern including leading and trailing blanks.

In summary, a printer control system for determining total character space width, for use, for example, in proportional spacing printing is provided in order to reduce memory requirements. During preparation for causing the dot pattern for a character to be printed on the page, the dot pattern is further analysed to determine its width for printer escapement. The total space width determined includes the leading blank space, the actual character width, and an amount of blank space following the defined dot pattern equal to the amount of preceding blank space.

**Claims**

1. A printer control system comprising
   means for receiving data representing characters to be printed including, for each character data representing the width of the space leading the character during printing, and
   character space determining means for determining the total width of the space to be occupied by each printed character,

characterised in that

   said character space determining means determines the total width of the total space to be occupied by the character as the sum of the width of the leading space in front of the character, the width of the character itself, and the width of a trailing space behind the character of size equal to the width of the leading space.

2. A printer control system as claimed in Claim 1 characterised in that said character space determining means determines the total width of the space for each character so that the characters can be printed with proportional spacing.

3. A printer control system as claimed in either of the preceding claims characterised in that said character space determining means defines a maximum size for the total width of each character space.

4. A printer control system as claimed in any one of the preceding claims characterised in that said character space determining means defines a minimum size for the total width of each character space.

0264267

**FIG. 1**

Prior Art

**FIG. 2**

Start

| Get pattern for character to print | — 4 |

| Determine number leading blank cols | — 5 |

| Determine width of actual character | — 6 |

| Escapement = 2 * leading blank cols + character width | — 7 |

8 — Escapement < 2 ? ? — Y → Escapement = 2 — 9

N

10 — Escapement > 12 ? ? — Y → Escapement = 12 — 11

N

12 — Starting at leftmost col, print calculated number of columns

End

**F I G.  3**